# EUROPEAN PATENT SPECIFICATION

(11) **EP 2 741 645 B1**
(45) Date of publication and mention of the grant of the patent: **09.03.2016**
(21) Application number: 12761652.2
(22) Date of filing: 08.08.2012
(51) Int. Cl.: A47J 31/46

(54) **MACHINE FOR THE DISPENSING OF ESPRESSO COFFEE**
MASCHINE ZUR AUSGABE VON ESPRESSO-KAFFEE
MACHINE DE DISTRIBUTION DE CAFÉ EXPRESSO

(30) Priority: 09.08.2011 IT MO20110205
(43) Date of publication of application: 18.06.2014
(73) Proprietor: CMA Macchine per caffè S.r.l., 31058 Susegana (TV) (IT)
(72) Inventor: LEONARDI, Fausto, 411214 Modena (IT)
(74) Representative: Gislon, Gabriele
(86) International application number: PCT/IB2012/001528
(87) International publication number: WO 2013/021267

(56) References cited:
- US-A1- 2004 000 237
- US-A1- 2004 177 760
- US-A1- 2011 174 162

## Description

### Technical Field

The present invention relates to a machine for the dispensing of espresso coffee.

### Background Art

Machines for the dispensing of espresso coffee of known type, most of which intended for professional use, generally comprise a supporting frame to which is associated at least a boiler for heating the water, one or more heat exchangers housed inside the boiler, and one or more coffee dispensing units connected to a related heat exchanger. Such a machine is known from US2004/0177760.

More in particular, the boiler has a heating element suitable for heating the water contained inside it and the exchangers, which receive heat by conduction from the boiler, are suitable for maintaining the temperature and the pressure of the water within an optimum range for the correct dispensing of the coffee.

As is known in fact, the water which is used to obtain the espresso coffee is that contained in the heat exchanger.

The machine can also be fitted with a hot water dispensing unit and with a steam dispensing unit, both connected to the boiler.

These coffee machines generally have a connection to the water mains, which is then connected to the boiler and to the heat exchanger by means of an inlet hydraulic circuit.

More in detail, because the operation of these machines comprises a plurality of stages, such as the filling of the boiler to a minimum level to prevent the heating element from burning out, the subsequent complete filling of the boiler and of the heat container, the dispensing of the coffee and the draining of the boiler, the inlet hydraulic circuit comprises a plurality of pipes, unions, valves, etc.... for connection to the water mains and for the performance in sequence of the above stages.

Each pipe is individual, generally made of copper and shaped from time to time depending on available overall dimensions. Furthermore, depending on the function, along the pipes, additional component parts can be fitted such as valves, meters, taps, etc ....

In the same way, the connection of the boiler and of the exchanger to the dispensing units is also made by means of an outlet hydraulic circuit comprising a plurality of individual pipes, valves and sensors of various types, such as level sensors, pressure sensors, etc...

To the pipes required to convey the water and steam are added the wires for making the power connections.

These coffee machines of known type have a number of drawbacks.

They are in fact considerably complicated in terms of construction and maintenance.

In fact, the assembly of the inlet and outlet hydraulic circuits is particularly difficult considering the high number of pipes which have to be assembled and the little room at disposal.

Once assembly has been completed, the various pipes intersect one another to form a finely-knit network of pipes, making any subsequent maintenance operations very complicated.

Another drawback of coffee machines of known type consists in the high number of components to be managed. The possibility of a breakage or a malfunction of a component does in fact increase in accordance with the number of parts used. Furthermore, the complex network of pipes defined at the end of the assembly operation can make certain components hard to reach, consequently, replacing a damaged element can also call for the removal of other components which are operating perfectly.

Again, the components used are generally different the one from the other, which results in the need to also use a plurality of tools of various types for assembly or maintenance.

The high number of component parts used also complicates the management of warehouse stocks and spare parts.

The result is therefore that the assembly and maintenance stages are considerably complex and very much correlated to the experience and capacity of the operator who performs them.

Last but not least, as can be easily appreciated, the complexity of these machines inevitably affects the end cost of the product, which is also further increased by the material used for the hydraulic pipes, generally copper.

The use of copper for food uses, furthermore, is strongly not recommended in some countries due to the possible release of toxic or harmful substances. Another drawback of machines of known type consists of scale which, with use, penetrates the inlet and outlet circuits, obstructing the relative pipes and causing the malfunction of the machines themselves.

### Description of the Invention

The main aim of the present invention is to provide a machine for dispensing espresso coffee which is considerably simpler, both from a maintenance and construction viewpoint, than the machines of known type.

Within this aim, one object of the present invention is to considerably reduce the number of pieces used to make the hydraulic connections, so as to ensure easier assembly, subsequent maintenance operations and management of warehouse stocks, and reduce the risk of breakages or malfunctions, etc...

One object of the present invention is therefore to best optimize the room at disposal, making the machine "cleaner", or more easily accessible both during the assembly and maintenance stages and during normal operation.

Another object of the present invention is as far as possible to free the correct assembly of the machine from the skills and experience of the operator who performs the operation.

Yet another object of the present invention is to ensure the easier use of materials other than copper to make the hydraulic connections.

Not the last object of the present invention is to considerably cut the costs required for manufacture and maintenance compared to the machines of known type.

Yet another object is to provide a machine which is more resistant to scale and which, therefore, requires fewer maintenance jobs compared to the machines of known type.

Another object of the present invention is to provide a machine for dispensing espresso coffee which allows to overcome the mentioned drawbacks of the state of the art in the ambit of a simple, rational, easy and effective to use as well as low cost solution.

These and other objects are achieved by a transmission and reproduction system of information contents according to what is described in the enclosed claims. The above objects are achieved by the present machine for the dispensing of espresso coffee, comprising:
- at least a boiler, associable with a bearing structure, for the containment and heating of water;
- at least a container suitable for containing water for the dispensing of coffee;
- at least an inlet hydraulic circuit suitable for connecting said boiler and said container to a water feeding line;
- at least a coffee dispensing unit;
- at least an outlet hydraulic circuit suitable for connecting at least said container to said coffee dispensing unit;
characterized by the fact that said inlet hydraulic circuit comprises at least a one-piece inlet block inside which is predefined at least a water transit duct having at least an inlet port connectable to a water feeding line, at least a transit mouth communicating with said boiler and at least an outlet port communicating with said container.

### Brief Description of the Invention

Other characteristics and advantages of the present invention will become more evident from the description of a preferred, but not sole, embodiment of a machine for the dispensing of espresso coffee, illustrated purely as an example but not limited to the annexed drawings in which:

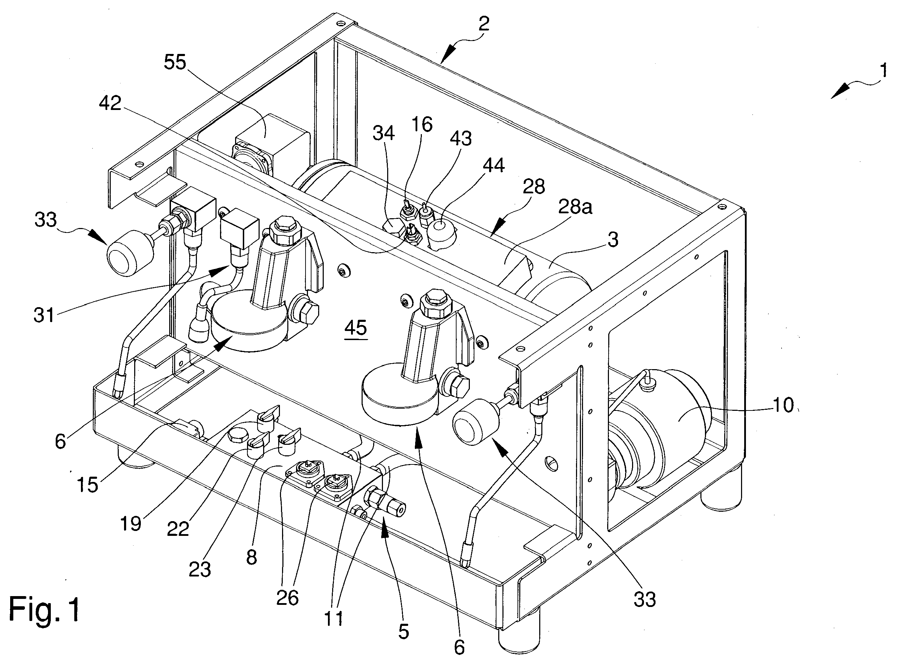

figure 1 is an axonometric front view of a machine according to the invention;

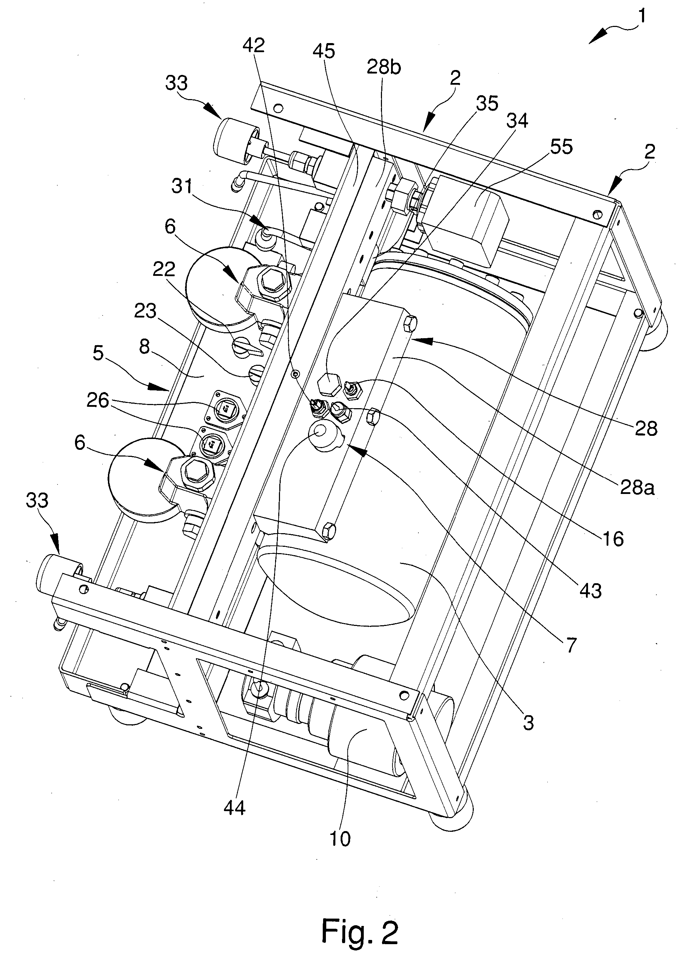

figure 2 is an axonometric rear view of the machine of figure 1;

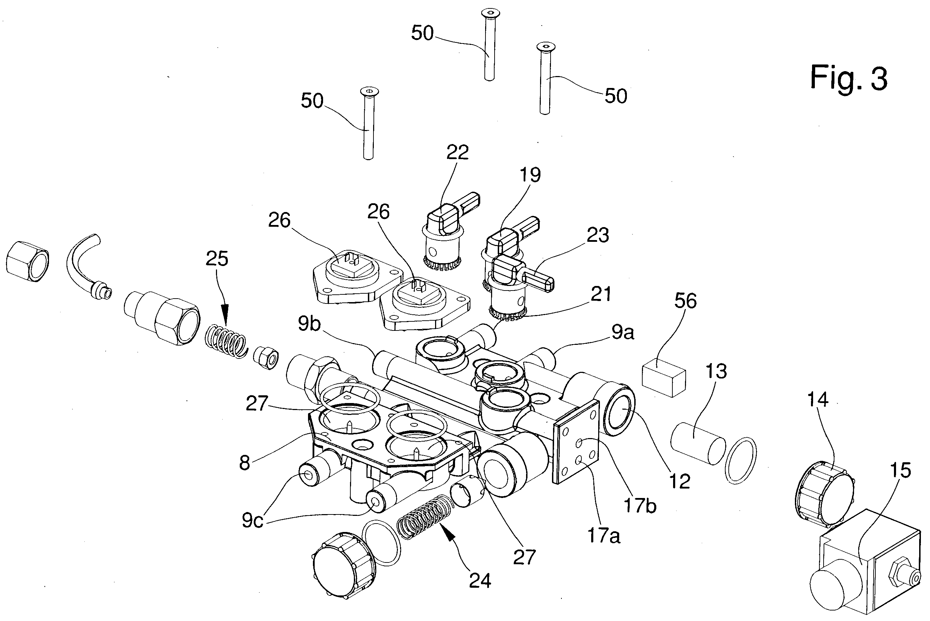

figure 3 is an exploded view of one part of the inlet hydraulic circuit of a machine according to the invention;
figure 4 is an axonometric view of the one-piece inlet block of the circuit of figure 3;
figure 5 is a first section view of the one-piece inlet block of figure 4;
figure 6 is a second section view of the one-piece inlet block of figure 4;

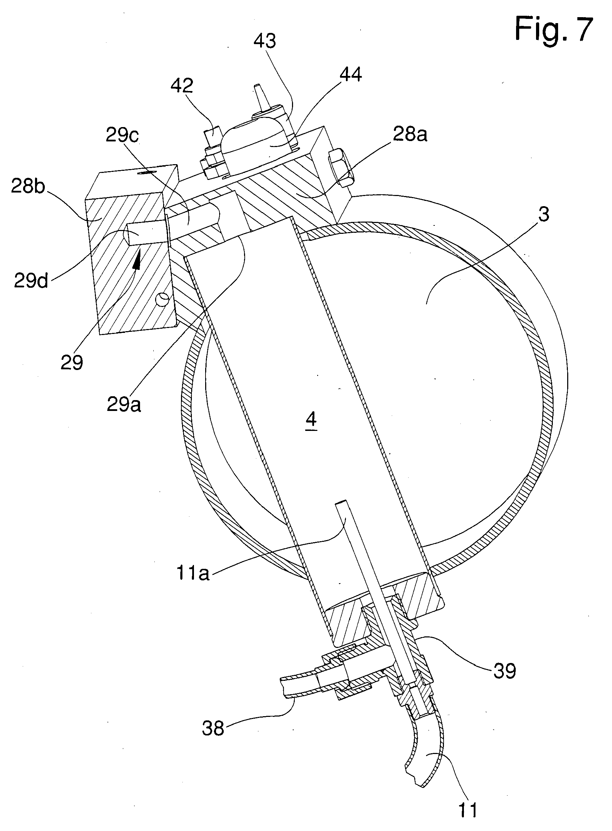

figure 7 is a section view of a detail of a machine according to the invention;

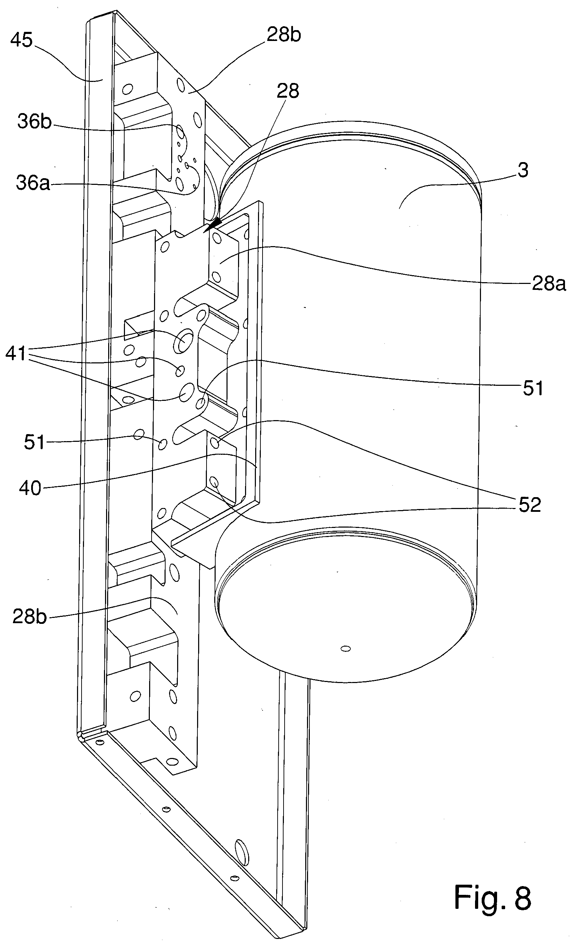

figure 8 is an axonometric view of the one-piece outlet block of a machine according to the invention associated with the relative boiler;

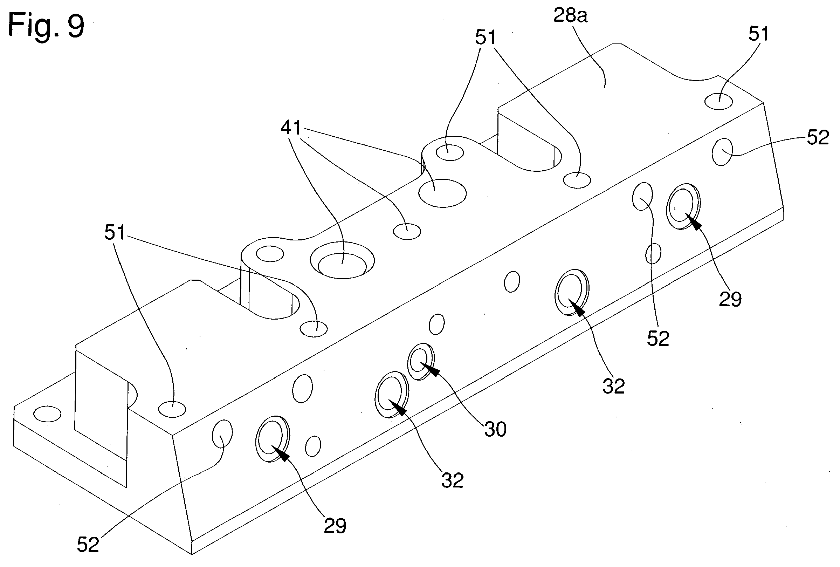

figure 9 is an axonometric view of the first block of the one-piece outlet block of figure 8;

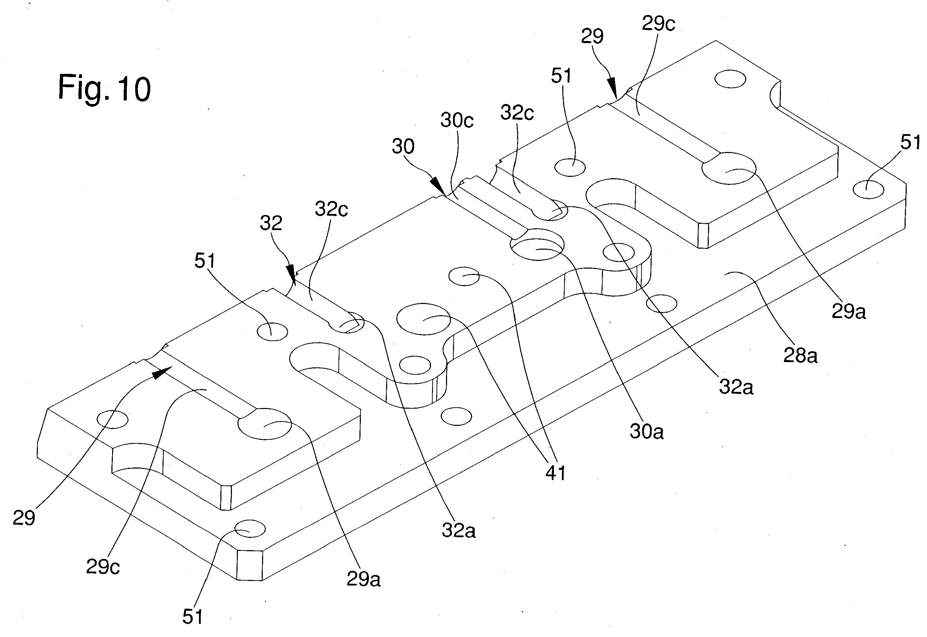

figure 10 is a section view of the first block of figure 9;

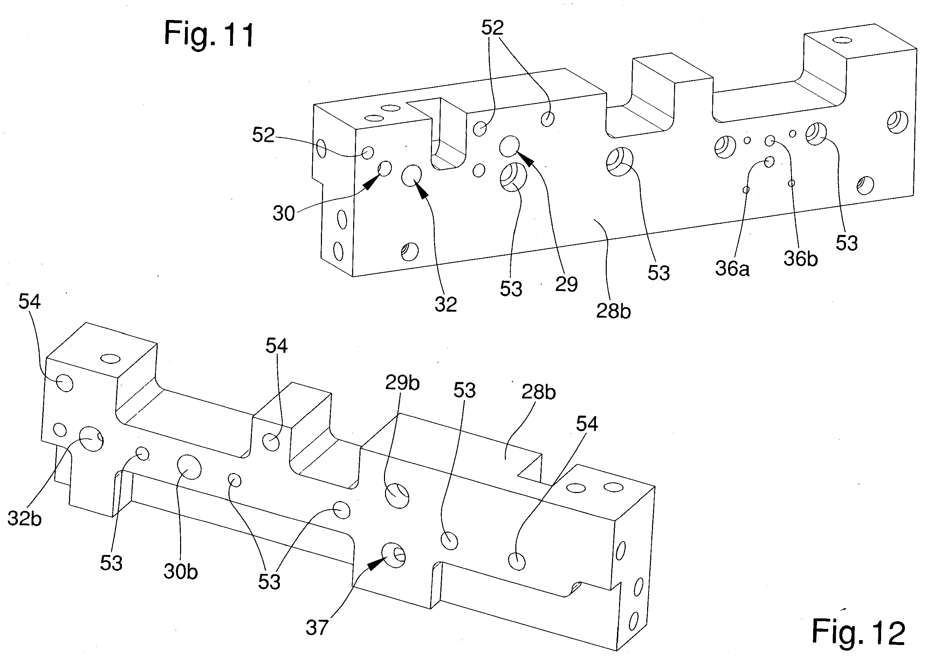

figure 11 is a first axonometric view of a second block of the one-piece outlet block of figure 8;
figure 12 is a second axonometric view of the second block of figure 11;

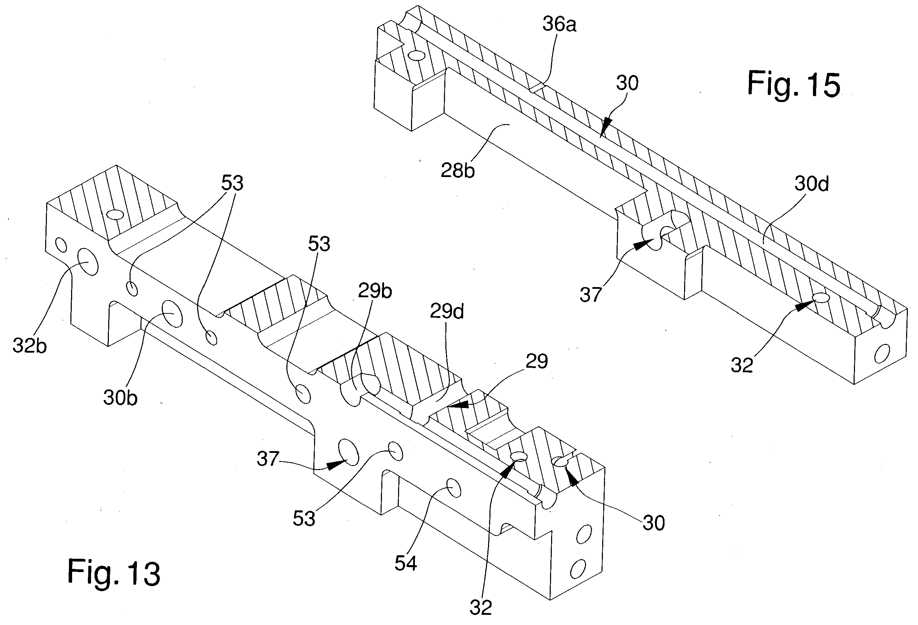

figure 13 is a first section of the second block of figure 11;

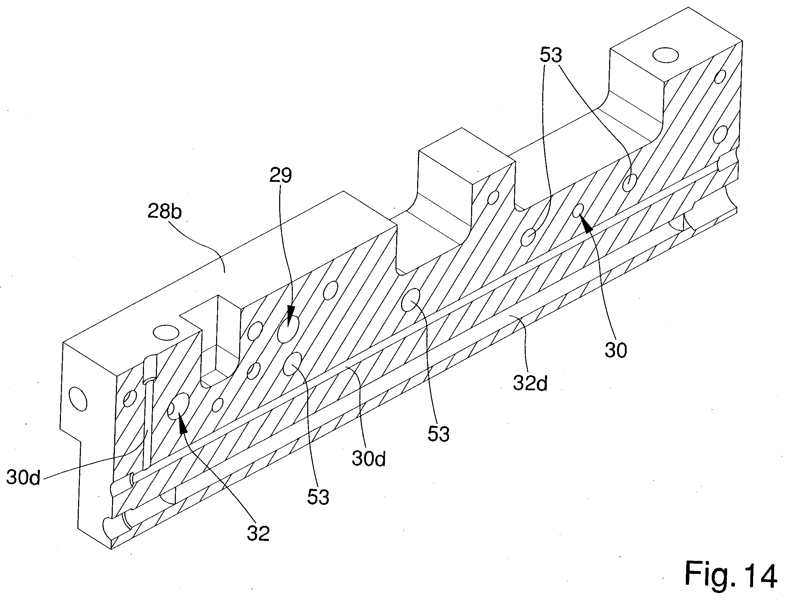

figure 14 is a second section of the second block of figure 11;
figure 15 is a third section of the second block of figure 11.

### Embodiments of the Invention

With particular reference to such figures, globally indicated by 1 is a machine for the dispensing of espresso coffee.

The machine 1 comprises at least one boiler suitable for containing and heating the water, at least one container 4 suitable for containing the water for dispensing the coffee, at least one inlet hydraulic circuit 5 suitable for connecting the boiler 3 and the container 4 to a water feeding line, and at least one coffee dispensing unit 6 connected to the container 4 by means of an outlet hydraulic circuit 7.

Suitably, the machine 1 comprises a bearing structure 2 and the boiler 3 is associated with such structure 2.

The water feeding line generally consists of the water mains.

More in particular, the boiler 3 comprises one container for the water coming from the feeding line and at least one heating element, generally of the electric or gas type and not shown in the illustrations, suitable for heating the water collected in the container itself. The heating element can be arranged inside this container, especially in the case of an electrical heating element, or outside it, especially in the case of a gas heating element.

This heating element is operatively connected to a pressure switch 55 in turn connected to the boiler 3 and suitable for changing the temperature of same according to the pressure detected inside the boiler 3. The pressure switch 55 thus triggers on the heating element so as to keep a more or less constant pressure inside the boiler 3.

The volume defined by the container 4 is separate from that delimited by the boiler 3.

In the embodiment shown in the illustrations, the container 4 is of the type of an exchanger contained at least partially in the boiler 3 and the water collected inside it receives heat by conduction from the water contained in the boiler itself. Alternative embodiments cannot however be ruled out wherein the container 4 is placed outside the boiler 3 and the water contained inside it arrives from the boiler itself or is heated by means of an independent heat source.

The container 4 is therefore suitable for keeping the water within an optimum temperature and pressure range for the correct dispensing of the espresso coffee. The number of containers 4 is equal to the number of coffee dispensing units 6. According to the invention, the inlet hydraulic circuit 5 comprises at least a one-piece inlet block 8 wherein is predefined at least one water transit duct 9 having at least one inlet port 9a associable with the feeding line, at least one transit mouth 9b communicating with the boiler 3 and at least one outlet port 9c communicating with the container 4. The inlet hydraulic circuit 5 and the one-piece inlet block 8 are hereinafter called, "inlet circuit 5" and "inlet block 8" respectively.

The inlet block 8 is associated removable with the structure 2, e.g., by means of threaded connection means 50.

Advantageously, the inlet block 8 is made of a material selected from the group comprising: plastic, stainless steel and aluminium for food use. In particular, in the case in which the inlet block 8 is made of plastic, this can be obtained by means of injection moulding.

Suitably, the inlet circuit 5 comprises at least one pump 10 connected on one side to the feeding line and on the other to the inlet port 9a.

The outlet port 9c is connected to the container 4 by means of a pipe 11, the end section of which has an injector 11a which protrudes inside the lower portion of the container itself.

Because, in the embodiment shown in the illustration, the machine 1 comprises two coffee dispensing units 6 and two containers 4, the transit duct 9 has two outlet ports 9c, each of which is connected to the relative container 4 by means of a pipe 11.

More in detail, the transit duct 9 comprises at least one common duct 9d having the inlet port 9a and from which branch out at least one first duct 9e communicating with the transit mouth 9b and at least one second duct 9f communicating with the outlet port 9c.

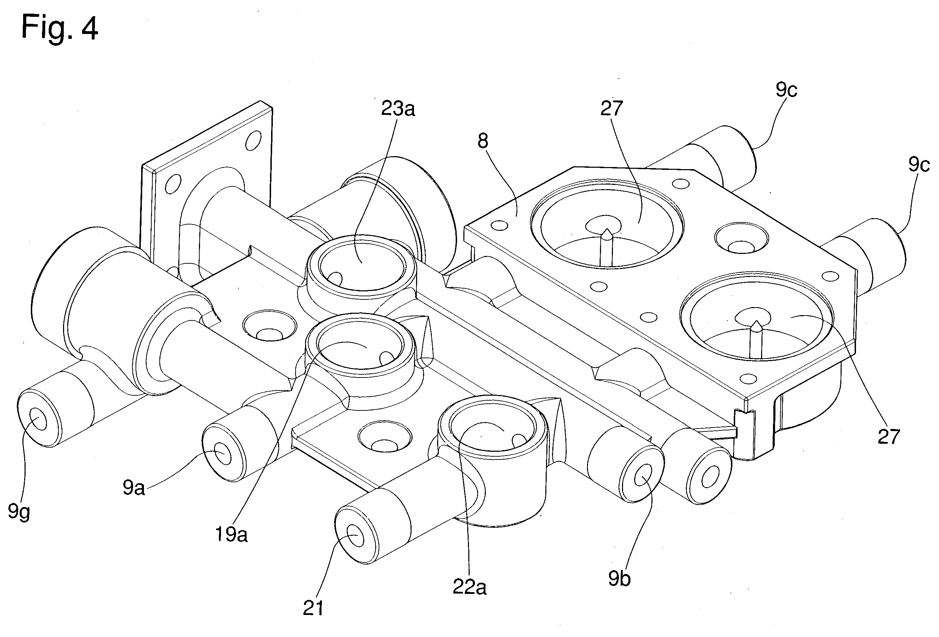

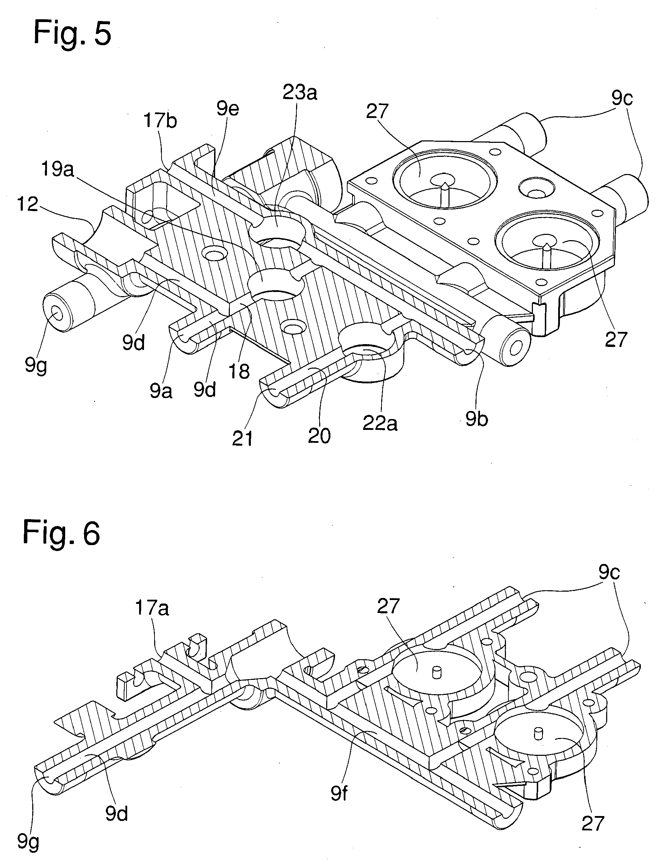

As shown in the figures 4, 5 and 6, the transit duct 9 also has a further outlet 9g suitable for being placed in communication with a pressure gauge 56. Furthermore, the transit duct 9 has an opening 12 inside which a filtering element 13 is fitted and which is closed, during use, by a cover 14.

Preferably, the inlet circuit 5 comprises at least one valve device 15, e.g., of the type of a solenoid valve, associated removable with the inlet block 8 along the first duct 9e and operatively connected to a level sensor 16 fitted in the boiler 3; the solenoid valve 15 is suitable for opening to allow water to flow towards the transit mouth 9b when the water level in the boiler 3 drops below the set reference level of the level sensor 16.

The first duct 9e therefore comprises a first and a second opening 17a and 17b communicating with the solenoid valve 15 for the inflow and the outflow of water respectively.

The solenoid valve 15 therefore opens automatically, during use, to allow filling the boiler 3 up to the level defined by the level sensor 16.

To ensure the solenoid valve 15 opens and closes automatically, the machine 1 must be switched on, i.e., it must be energized.

Suitably, the inlet block 8 also comprises a bypass duct 18 communicating with the inlet port 9a, and therefore also with the common duct 9d, and with a section of the first duct 9e placed between the solenoid valve 15 and the transit mouth 9b. Along the bypass duct 18, a first tap 19 is arranged which can be operated, for example manually, to allow/prevent the flow of water through the bypass duct itself. More in particular, the inlet block 8 defines a first seat 19a for housing the first tap 19.

The bypass duct 18 and the first tap 19 allow at least partially filling the boiler 3 even when the machine 1 is off, so as to prevent the heating element (in the event of this being placed inside the container defined by the boiler 3 and being of the electrical heating element type) from burning out. By moving the first tap 19 to open position, water can thus be introduced inside the boiler 3 quite apart from the state of the solenoid valve 15.

The inlet block 8 also comprises at least one water exhaust duct 20 communicating with a section of the first duct 9e placed between the transit mouth 9b and the solenoid valve 15 and with an exhaust port 21 connectable to a water exhaust line; along the exhaust duct 20 at least one second tap 22 is arranged which can be operated to prevent/allow the flow of water along the exhaust duct itself. More in particular, the inlet block 8 defines a second seat 22a for housing the first tap 22.

As shown on the attached illustrations, along the first duct 9e, and in particular along the section placed between the transit mouth 9b and the solenoid valve 15, a third tap 23 is also arranged which can be operated to allow/prevent the flow of water along such section. The inlet block 8 defines a third seat 23a for housing the third tap 23.

Preferably, the inlet circuit 5 comprises at least one low-pressure valve 24 arranged along the second duct 9f upstream of the outlet ports 9c with respect to the direction of flow of the water. Such low-pressure valve 24 is of the mechanical type and is suitable for opening once the first predetermined pressure value is achieved along the second duct 9f. Consequently, until the pressure of the water along the second duct 9f reaches the first predetermined pressure value, the low-pressure valve 24 remains closed and prevents water flowing out towards the containers 4.

The inlet circuit 5 also comprises a high-pressure valve 25 which is also arranged along the second duct 9f and is suitable for opening when a second predefined pressure is reached, greater than the first value relating to the low-pressure valve 24, along the second duct itself. Suitably, the high-pressure valve 25 is arranged downstream of the low-pressure valve 24 with respect to the direction of flow of the water towards the outlet ports 9c, in correspondence to the extremity section of the second duct 9f; such high-pressure valve 25 in fact acts as a safety valve, inasmuch as it is suitable for preventing the pressure inside the second duct 9f from increasing excessively.

In an alternative embodiment, not shown in the illustrations, the inlet circuit 5 can also comprise one or more further inlet blocks associated with the inlet block 8 in correspondence to the extremity section of the second duct 9f. Such further inlet blocks define respective further second ducts which act as extension of the second duct 9f and along which are present one or more further outlet ports. In this alternative embodiment, the high-pressure valve 25 is positioned in correspondence to the extremity section of the last further second duct.

Advantageously, the inlet circuit 5 comprises at least one volumetric meter 26 associated with the inlet block 8 along the second duct 9f and suitable for performing the measurements of the water flow rate.

More in particular, the inlet circuit 5 comprises a number of meters 26 corresponding to the number of outlet ports 9c, where each meter 26 is arranged in the proximity of the relative outlet port 9c and is suitable for measuring the flow rate of water which crosses it and which therefore ends up in the corresponding container 4. Suitably, the inlet block 8 defines a housing seat 27 for each meter 26.

The seats 27 can be suitably closed in the event of the machine 1 not contemplating the use of any volumetric meter, leaving the operation of the inlet circuit 5 unchanged.

Preferably, the outlet hydraulic circuit 7, hereinafter "outlet circuit 7", comprises at least a one-piece outlet block 28, hereinafter "outlet block 28", placed between the boiler 3 and the coffee dispensing unit 6.

In the outlet block 28 is predetermined at least one dispensing channel 29, communicating at one extremity with a relative container 4 and at the other extremity with the corresponding coffee dispensing unit 6, and at least one between a hot water delivery channel 30, communicating at one extremity with the boiler 3 and at the other extremity with a hot water dispensing unit 31, and a steam emission channel 32, communicating at one extremity with the boiler 3 and at the other extremity with a steam dispensing unit 33.

Preferably, the outlet block 28 comprises at least one dispensing channel 29, at least one delivery channel 30 and at least one emission channel 32.

In the embodiment shown in the illustrations, the outlet block 28 therefore has two dispensing channels 29, each of which communicates directly with the relative container 4 on one side and with the corresponding coffee dispensing unit 6 on the other side. The outlet block 28 also comprises two steam emission channels 32 and a hot water delivery channel 30.

To the technician in the sector it appears obvious that the dispensing channels 29, the delivery channels 30 and the emission channels 32 are as many in number as the respective dispensing units 6, 31 and 33.

Advantageously, each channel 29, 30 and 32 has at least one relative first port 29a, 30a and 32a communicating directly with the relative container 4 or with the boiler 3 and at least one relative second port 29b, 30b and 32b communicating directly with the corresponding dispensing unit 6, 31 and 33. The term "communicating directly" is used here to mean that between the elements to which reference is made no further connection element is placed. Suitably, along the delivery channel 30, a pipe for picking up the hot water is fitted which protrudes from the relative first port 30a and extends inside the boiler 3.

Along the delivery channel 30 is also placed a solenoid valve 35 associated removable with the outlet block 28 and suitable for preventing/allowing the flow of hot water towards the dispensing unit 31. More in particular, the delivery channel 31 also has two further openings, of which one inlet opening 36a and one outlet opening 36b, placed between the first and the second ports 30a and 30b and communicating with the solenoid valve 35.

The outlet block 28 also comprises at least one backflow duct 37 for each container 4, separate from the relative dispensing channel 29 and communicating at one extremity with the relative coffee dispensing unit 6 and at the other extremity with the corresponding container 4.

More in particular, each coffee dispensing unit 6 comprises a solenoid valve which can be operated to allow dispensing the coffee and therefore the flow of water inside it. Such solenoid valve, not visible in detail in the illustrations, is placed in communication with the relative dispensing channel 29 and with the relative backflow duct 37, inside which the water is made to re-circulate in the event of such solenoid valve being closed.

The backflow duct 37 is then connected to the container by means of a pipe 38. Preferably, each container 4 has a connector 39 wherein run the pipes 11 and 38 coming from the inlet block 8 and the outlet block 28 respectively.

The outlet block 28 is associated removable with the boiler 3 and with the dispensing units 6, 31 and 33, for example by means of threaded connection means. The outlet block 28 therefore comprises a plurality of holes 51 for housing corresponding threaded elements suitable for interacting with the boiler 3 to make the reciprocal connection.

More in detail, the machine 1 comprises a supporting plate 40, fastened integral to the boiler 3 and defining a housing seat for the outlet block 28. The threaded elements fitted in the holes 51 are suitable for engaging with corresponding holes defined in the plate 40.

Advantageously, the outlet block 28 comprises at least one seat 41 for housing at least one between the level sensor 16, a supporting element 34 for supporting the hot-water pickup pipe, a pressure sensor 42, an indicator valve 43 suitable for signalling the presence of pressure inside the boiler 3 and a safety valve 44. Preferably, the outlet block 28 has a plurality of seats 41 for housing the level sensor 16, the supporting element 34, the pressure sensor 42, the indicator valve 43 and the safety valve 44. Suitably, the seat 41 wherein is fitted the supporting element 34 is communicating with the delivery channel 30.

In the preferred embodiment shown in the illustrations, the outlet block 28 comprises at least a first block 28a associated with the boiler 3 and at least a second block 28b associated with one or more of the dispensing units 6, 31 and 33, where the first and the second units 28a and 28b are directly associated with each other in a removable way. The first and the second blocks 28a and 28b therefore have a plurality of relative holes 52 interlinked the one with the other by means of the connection elements not visible in detail in the illustrations. The second unit 28b also comprises a plurality of holes 53 suitable for housing corresponding connection elements for connection to the dispensing units 6, 31 and 33.

At least one of the channels 29, 30 and 32, preferably each of them, has at least one relative first section 29c, 30c and 32c defined in the first block 28a and comprising the relative first port 29a, 30a and 32a and a relative second section 29d, 30d and 32d defined in the second block 28b and comprising the relative second port 29b, 30b and 32b.

The embodiment shown in the illustrations has a first block 28a and two second blocks 28b, where each of such second blocks 28b is suitable for connecting the first block 28a to relative dispensing units 6, 31 and 33.

More in detail, in one of the second blocks 28b are predefined the second sections 29d, 30d and 32d of one of the dispensing channels 29, of one of the emission channels 32 and of the delivery channel 30, while in the other are predefined the second sections 29d and 32d of the other dispensing channel 29 and of the other emission channel 32. The openings 36a and 36b for the connection to the solenoid valve 35 are defined along the second section 30d of the delivery channel 30 defined in the relative second block 28b.

Alternative embodiments cannot however be ruled out wherein the outlet block 28 has just one second block 28b suitable for connecting the first block 28a to all the dispensing units 6, 31 and 33.

As can be seen in the illustrations 8 and 9, the seats 41 are defined in the first block 28a while the backflow ducts 37 are defined in the relative second blocks 28b. Alternative embodiments cannot however be ruled out wherein the backflow ducts 37 also have a relative first section defined in the first block 28a and a relative second section defined in the second block 28b.

Suitably, the second blocks 28b are associated removable, not only with the first block 28a, but also with a supporting wall 45 of the structure 2, with which are also associated the dispensing units 6, 31 and 33. More in particular, the second blocks 28b comprise a plurality of holes 54 suitable for housing corresponding connection elements for connecting to the wall 45.

In the embodiment shown in the illustrations 1 and 2, the wall 45 is therefore suitable for supporting the weight of the boiler 3, of the outlet block 28 and of the dispensing units 6, 31 and 33.

The first and the second blocks 28a and 28b are made preferably of aluminium for food use or treated for such use.

Advantageously, the machine 1 also comprises an electric circuit, control means for controlling such electric circuit and operating means for operating one or more dispensing units 6, 31 and 33.

More in detail, the control means comprise at least one switch positionable in three different work positions, where in the first it interrupts the electric circuit and prevents the circulation of the current, in the second supplies only the solenoid valve 15 to allow this to open and close and in the third also supplies the heating element of the boiler 3 and the dispensing units 6, 31 and 33, as well as the relative operating means. In the event of the heating element being of the gas type, it can be operated by means of control means distinct from the switch. The inlet block 8 and the outlet block 28, if made of a light alloy such as aluminium, can be treated with a surface coating with the addition of silver ions according to what is described and claimed in the patent EP1207220. Such treatment gives the inlet block 8 and/or the outlet block 28 anti-bacterial, anti-mildew, anti-corrosion and anti-scale properties and increases resistance to abrasive wear, improving anti-stick and sliding, increases heat conductivity and heat dispersion and gives greater mechanical strength.

The operation of the machine according to the invention is the following. When the switch is in the first position, the machine is off and, therefore, no current circulates inside it in the electric circuit.

With the switch in this position, water can in any case be introduced into the boiler 3 opening the first tap 19 so as, in the event of the heating element being composed of an electric heating element inside the container defined by the boiler, to prevent such heating element, when operated, from overheating to the point of melting. This way, the water coming from the feeding line and which enters the inlet block 8 passes through the bypass duct 18 and the transit mouth 9b, reaching the boiler 3.

Subsequently, the machine 1 is switched on, moving the switch to the second operating position, wherein current is supplied to the electric circuit but not to the heating element. At the same time, the first tap 19 is moved to closed position so as to prevent the flow of water along the bypass duct 18.

In this operating condition, the solenoid valve 15 opens because the level of water in the boiler has not yet reached the level sensor 16, allowing the water coming from the common duct 9d to flow away along the first duct 9e towards the transit mouth 9b. The third tap 23 is open. The solenoid valve 15 closes when the level of water in the boiler 3 reaches the level sensor 16.

Once the pressure in the second duct 9f reaches the first predetermined value, which corresponds to the setting value of the low-pressure valve 24, the latter opens to allow the water to flow away towards the outlet ports 9c and, through these, into the containers 4.

In this operating situation, the water contained in the boiler 3 and in the containers 4 is still cold and, therefore, not suitable for dispensing coffee.

By moving the switch to the third operating position, the operation is started of the heating element and, therefore, also the heating of the water contained inside the boiler 3 and the consequent increase in pressure needed to obtain the convective movement of water between the containers 4 and the coffee dispensing units 6, as explained below in greater detail. As has been said above, due to the effect of conduction, the water contained in the containers 2 also heats up.

More in particular, the hotter part of the water contained in the containers 4 collects naturally in their upper part and enters the dispensing channel 29. During this journey, the water cools down and, because the solenoid valve of the relative coffee dispensing unit 6 is closed at this stage, returns into the container 4 passing through the backflow duct 37. This way, a convective type movement of the water is obtained inside the machine 1.

At the time of wanting to dispense coffee, the user intervenes on the starting means which, by commanding the pump 10, convey more water, cold and at high pressure, inside the inlet circuit 5.

The water is thus introduced through the common duct 9d and the second duct 9f, entering the containers 4. The meters 26 are set in such a way that into the containers 4 is introduced the quantity required and sufficient to dispense the correct quantity of coffee. The meters 26 are therefore operatively connected to the solenoid valves of the coffee dispensing units 6.

The water entering the containers 4 causes an increase in pressure inside these and the consequent flow of the water contained in the relative dispensing channels 29 and in the relative backflow ducts 37 towards the corresponding coffee dispensing units 6. The mixing of the two flows of water coming from the dispensing channel 29 and from the backflow duct 37 allows reaching the optimum temperature and condensing the steam present. The coffee dispensing units 6 now have their respective solenoid valves open and thus allow the water to flow through and the consequent dispensing of the coffee.

The operation of the machine 1 for the dispensing of steam or hot water is immediately understandable by a technician in the sector.

In fact, by intervening on the starting means, the user can open the solenoid valve 35 arranged along the delivery channel 30, thereby allowing the dispensing of the hot water; the opening of the solenoid valve 35 causes the return of hot water from the boiler 3 by means of the pickup pipe supported by the first block 28b.

In the same way, the steam dispensing unit 33 can be fitted with a relative solenoid valve controllable by means of the starting means or can be fitted with a manual-operating tap to allow the steam to escape.

Once use of the machine 1 has terminated, if the boiler has to be emptied for maintenance or transport reasons, the machine 1 must first of all be switched off and the hot parts must be allowed to cool down and the pressure allowed to drop (visible by means of the indicator valve 43).

Once the machine 1 has cooled down, the second tap 22 is then opened and the water contained in the boiler 3 is allowed to flow out on the outside.

It has in fact been ascertained how the described invention achieves the proposed objects and in particular the fact is underscored that the presence of the one-piece inlet block permits considerably reducing the components used to connect the boiler and the container to the water feeding line.

The inlet block, in fact, allows considerably simplifying the assembly and maintenance operations, thus cutting the times required for their performance and the relative costs related to them.

The reduction in the number of components used also allows proportionately reducing the risk of breakages or malfunctions and makes managing warehouse stocks considerably easier.

The assembly of the machine according to the invention is also made easier by the fact that the one-piece blocks can be preassembled separately from the other components and fitted subsequently.

Again, the one-piece inlet block according to the invention can be fitted to any type of coffee machine, both in existence and newly manufactured, thus allowing extensive operating flexibility.

The same considerations are also true as regards the presence of the outlet one-piece block.

## Claims

1. Machine (1) for the dispensing of espresso coffee, comprising:
- at least a boiler (3), associable with a bearing structure (2), for the containment and heating of water;
- at least a container (4) suitable for containing water for the dispensing of coffee;
- at least an inlet hydraulic circuit (5) suitable for connecting said boiler (3) and said container (4) to a water feeding line;
- at least a coffee dispensing unit (6);
- at least an outlet hydraulic circuit (7) suitable for connecting at least said container (4) to said coffee dispensing unit (6);
**characterized by** the fact that said hydraulic inlet circuit (5) comprises at least a one-piece inlet block (8) inside which is predefined at least a water transit duct (9) having at least an inlet port (9a) connectable to a water feeding line, at least a transit mouth (9b) communicating with said boiler (3) and at least an outlet port (9c) communicating with said container (4).

2. Machine (1) according to claim 1, **characterized by** the fact that said one-piece inlet block (8) is made of a material selected among: plastic, stainless steel and aluminium.

3. Machine (1) according to claim 1 or 2, **characterized by** the fact that said transit duct (9) has at least a common duct (9d) comprising said inlet port (9a) and at least a first and a second duct (9e, 9f) which branch off from said common duct (9d) and which comprise said transit mouth (9b) and said outlet port (9c) respectively.

4. Machine (1) according to one or more of the preceding claims, **characterized by** the fact that said hydraulic inlet circuit (5) comprises at least a valve device (15) associated with said one-piece inlet block (8) along said first duct (9e) and operatively connected to a level sensor (16) fitted into said boiler (3), said valve device (15) opening to allow water to flow towards said transit mouth (9b) when the water level in the boiler (3) drops below the level predetermined by said level sensor (16).

5. Machine (1) according to one or more of the preceding claims, **characterized by** the fact that said one-piece inlet block (8) comprises at least a bypass duct (18) communicating with said inlet port (9a) and with a section of said first duct (9e) placed between said valve device (15) and said transit mouth (9b) and by the fact that along said bypass duct (18) is arranged at least a first tap (19) which can be operated to allow/prevent the flow of water.

6. Machine (1) according to one or more of the preceding claims, **characterized by** the fact that said one-piece inlet block (8) comprises at least a water exhaust duct (20) communicating with a section of said first duct (9e) placed between said transit mouth (9b) and said valve device (15) and with an exhaust port (21) connectable to a water exhaust line, along said exhaust duct (20) being arranged at least a second tap (22) which can be operated to prevent/allow the flow of water along said exhaust duct (20).

7. Machine (1) according to one or more of the preceding claims, **characterized by** the fact that said hydraulic inlet circuit (5) comprises at least a volumetric meter (26) associated with said one-piece inlet block (8) along said second duct (9f), said one-piece inlet block (8) defining at least a seat (27) for housing said volumetric meter (26).

8. Machine (1) according to one or more of the preceding claims, **characterized by** the fact that said hydraulic outlet circuit (7) comprises at least a one-piece outlet block (28) placed between said boiler (3) and said coffee dispensing unit (6) and in which are predetermined at least a water dispensing channel (29), communicating at one extremity with said container (4) and at the other extremity with said coffee dispensing unit (6), and at least one between at least a hot water delivery channel (30), communicating at one extremity with said boiler (3) and at the other extremity with a hot water dispensing unit (31), and at least a steam emission channel (32), communicating at one extremity with said boiler (3) and at the other extremity with a steam dispensing unit (33).

9. Machine (1) according to claim 8, **characterized by** the fact that at least one of said channels (29, 30, 32) has at least a first port (29a, 30a, 32a) communicating directly with said container (4) or with said boiler (3) and at least a second port (29b, 30b, 32b) communicating directly with the relevant dispensing unit (6, 31, 33).

10. Machine (1) according to claim 8 or 9, **characterized by** the fact that in said one-piece outlet block (28) is predetermined at least a water backflow duct (37), separate from said dispensing channel (29) and communicating at one extremity with said coffee dispensing unit (6) and at the other extremity with said container (4).

11. Machine (1) according to one or more of the claims from 8 to 10, **characterized by** the fact that said one-piece outlet block (28) comprises at least a seat (41) for housing at least a sensor (16, 42) and/or at least a valve (43, 44) communicating with said boiler (3) or with said container (4).

12. Machine (1) according to one or more of the preceding claims, **characterized by** the fact that said at least one-piece outlet block (28) comprises at least a first block (28a) associated with said boiler and at least a second block (28b) associated with at least one of said dispensing units (6, 31, 33), said first and said second block (28a, 28b) being directly associated with each other in a removable way.

13. Machine (1) according to claim 12, **characterized by** the fact that at least one of said channels (29, 30, 32) has a relative first section (29c, 30c, 32c), defined in said first block (28a) and comprising the relative first port (29a, 30a, 32a), and a relative second section (29d, 30d, 32d), defined in said second block (28b) and comprising the relative second port (29b, 30b, 32b).

14. Machine (1) according to claim 12 or 13, **characterized by** the fact that said first block (28a) is associated in a removable way with said boiler (3) and that said second block (28b) is associated in a removable way with at least one of said dispensing units (6, 31, 33).

15. Machine (1) according to one or more of the claims from 10 to 14, **characterized by** the fact that said seats (41) are defined in said first block (28a) and that said backflow duct (37) is defined in said second block (28b).

## Patentansprüche

1. Maschine (1) für die Ausgabe von Espresso-Kaffee, umfassend:
- mindestens einen Kessel (3), zuordenbar einer Lagerstruktur (2), für die Lagerung und das Erhitzen von Wasser;
- mindestens einen Behälter (4), geeignet zum Lagern von Wasser für die Ausgabe von Kaffee;
- mindestens einen Einlass-Hydraulikkreislauf (5), geeignet zum Verbinden des Kessels (3) und des Behälters (4) mit einer Wasserzufuhrleitung;
- mindestens eine Kaffeeausgabeeinheit (6);
- mindestens einen Auslass-Hydraulikkreislauf (7), geeignet zum Verbinden mindestens des Behälters (4) mit der Kaffeeausgabeeinheit (6);
**dadurch gekennzeichnet, dass** der Einlass-Hydraulikkreislauf (5) mindestens einen einstückigen Einlassblock (8) umfasst, innerhalb dessen mindestens ein Wasserdurchgangskanal (9) vordefiniert ist, welcher mindestens eine mit einer Wasserzufuhrleitung verbindbare Einlassöffnung (9a), mindestens eine mit dem Kessel (3) kommunizierende Durchgangsöffnung (9b) und mindestens eine mit dem Behälter (4) kommunizierende Auslassöffnung (9c) umfasst.

2. Maschine (1) gemäß Anspruch 1, **dadurch gekennzeichnet, dass** der einstückige Einlassblock (8) aus einem Material hergestellt ist, welches aus Kunststoff, Edelstahl und Aluminium ausgewählt ist.

3. Maschine (1) gemäß Anspruch 1 oder 2, **dadurch gekennzeichnet, dass** der Durchgangskanal (9) mindestens eine gemeinsame Leitung (9d) aufweist, umfassend die Einlassöffnung (9a), und mindestens einen ersten und einen zweiten Kanal (9e, 9f) aufweist, welche von der gemeinsamen Leitung (9d) abzweigen und die die Durchgangsöffnung (9b) bzw. die Auslassöffnung (9c) umfassen.

4. Maschine (1) gemäß einem oder mehreren der vorhergehenden Ansprüche, **dadurch gekennzeichnet, dass** der Einlass-Hydraulikkreislauf (5) mindestens eine Ventilvorrichtung (15) umfasst, die dem einstückigen Einlassblock (8) entlang dem ersten Kanal (9e) zugeordnet ist und operativ mit einem in den Kessel (3) eingepassten Füllstandssensor (16) verbunden ist, wobei die Ventilvorrichtung (15) sich öffnet, um es zu ermöglichen, dass Wasser in Richtung der Durchgangsöffnung (9b) fließt, wenn der Wasserstand im Kessel (3) unter das durch den Füllstandssensor (16) vordefinierte Niveau fällt.

5. Maschine (1) gemäß einem oder mehreren der vorhergehenden Ansprüche, **dadurch gekennzeichnet, dass** der einstückige Einlassblock (8) mindestens einen Seitenkanal (18) umfasst, der mit der Einlassöffnung (9a) und mit einem Abschnitt des ersten Kanals (9e), welcher zwischen der Ventilvorrichtung (15) und der Durchgangsöffnung (9b) plaziert ist, kommuniziert und dadurch, dass entlang des Seitenkanals (18) mindestens ein erster Hahn (19) angeordnet ist, der betätigt werden kann, um den Fluss von Wasser zu erlauben bzw. zu verhindern.

6. Maschine (1) gemäß einem oder mehreren der vorhergehenden Ansprüche, **dadurch gekennzeichnet, dass** der einstückige Einlassblock (8) mindestens einen Wasserablaufkanal (20) aufweist, der mit einem Abschnitt des ersten Kanals (9e), welcher zwischen der Durchgangsöffnung (9b) und der Ventilvorrichtung (15) plaziert ist, und mit einer Ablauföffnung (21), die mit einer Wasserablaufleitung verbindbar ist, kommuniziert, und dadurch, dass entlang des Ablaufkanals (20) mindestens ein zweiter Hahn (22) angeordnet ist, der betätigt werden kann, um den Fluss von Wasser entlang des Ablaufkanals (20) zu verhindern bzw. zu erlauben.

7. Maschine (1) gemäß einem oder mehreren der vorhergehenden Ansprüche, **dadurch gekennzeichnet, dass** der Einlass-Hydraulikkreislauf (5) mindestens ein Volumenmessgerät (26) umfasst, welches dem einstückigen Einlassblock (8) entlang dem zweiten Kanal (9f) zugeordnet ist, wobei der einstückige Einlassblock (8) mindestens einen Sitz (27) zur Aufnahme des Volumenmessers (26) aufweist.

8. Maschine (1) gemäß einem oder mehreren der vorhergehenden Ansprüche, **dadurch gekennzeichnet, dass** der Auslass-Hydraulikkreislauf (7) mindestens einen einstückigen Auslassblock (28) umfasst, welcher zwischen dem Kessel (3) und der Kaffeeausgabeeinheit (6) plaziert ist und innerhalb dessen mindestens ein Wasserausgabekanal (29), der an einem Ende mit dem Behälter (4) und an dem anderen Ende mit der Kaffeeausgabeeinheit (6) kommuniziert, und mindestens ein Heizwasserversorgungskanal (30), der an einem Ende mit dem Kessel (3) und an dem anderen Ende mit einer Heißwasserausgabeeinheit (31) kommuniziert, und mindestens ein Dampfemissionskanal (32), der an einem Ende mit dem Kessel (3) und an dem anderen Ende mit einer Dampfausgabeeinheit (33) kommuniziert, vordefiniert sind.

9. Maschine (1) gemäß Anspruch 8, **dadurch gekennzeichnet, dass** mindestens einer der Kanäle (29, 30, 32) mindestens eine erste Öffnung (29a, 30a, 32a) aufweist, die direkt mit dem Behälter (4) oder mit dem Kessel (3) kommuniziert, und mindestens eine zweite Öffnung (29b, 30b, 32b) aufweist, die direkt mit der entsprechenden Ausgabeeinheit (6, 31, 33) kommuniziert.

10. Maschine (1) gemäß Anspruch 8 oder 9, **dadurch gekennzeichnet, dass** in dem einstückigen Auslassblock (28) mindestens eine Wasserrückflussleitung (37) vordefiniert ist, welche von dem Ausgabekanal (29) getrennt ist und an einem Ende mit der Kaffeeausgabeeinheit (6) und an dem anderen Ende mit dem Behälter (4) kommuniziert.

11. Maschine (1) gemäß einem oder mehreren der Ansprüche 8 bis 10, **dadurch gekennzeichnet, dass** der einstückige Auslassblock (28) mindestens einen Sitz (41) zur Aufnahme von mindestens einem Sensor (16, 42) und / oder von mindestens einem Ventil (43, 44) umfasst, kommunizierend mit dem Kessel (3) oder mit dem Behälter (4).

12. Maschine (1) gemäß einem oder mehreren der vorhergehenden Ansprüche, **dadurch gekennzeichnet, dass** der mindestens eine einstückige Auslassblock (28) mindestens einen ersten Block (28a) umfasst, der dem Kessel zugeordnet ist, und mindestens einen zweiter Block (28b) umfasst, der mindestens einer der Ausgabeeinheiten (6, 31, 33) zugeordnet ist, wobei der erste und der zweite Block (28a, 28b) direkt einander in einer lösbarer Weise zugeordnet sind.

13. Maschine (1) gemäß Anspruch 12, **dadurch gekennzeichnet, dass** mindestens einer der Kanäle (29, 30, 32) einen relativen ersten Abschnitt (29c, 30c, 32c) aufweist, welcher in dem ersten Block (28a) definiert ist und die relative erste Öffnung (29a, 30a, 32a) umfasst, und einen relativen zweiten Abschnitt (29d, 30d, 32d) umfasst, der in dem zweiten Block (28b) definiert ist und die relative zweite Öffnung (29b, 30b, 32b) umfasst.

14. Maschine (1) gemäß Anspruch 12 oder 13, **dadurch gekennzeichnet, dass** der erste Block (28a) in einer lösbarer Weise dem Kessel (3) zugeordnet ist und dass der zweite Block (28b) in einer lösbarer Weise mindestens einer der Ausgabeeinheiten (6, 31, 33) zugeordnet ist.

15. Maschine (1) gemäß einem oder mehreren der Ansprüche 10 bis 14, **dadurch gekennzeichnet, dass** die Sitze (41) in dem ersten Block (28a) definiert sind und dass die Rückflussleitung (37) in dem zweiten Block (28b) definiert ist.

## Revendications

1. Machine (1) de distribution de café expresso, comprenant :
- au moins une bouilloire (3), pouvant être associée à une structure portante (2), pour contenir et chauffer de l'eau ;
- au moins un contenant (4) adapté pour contenir de l'eau pour la distribution de café ;
- au moins un circuit hydraulique d'admission (5) adapté pour raccorder ladite bouilloire (3) et ledit contenant (4) à un conduit d'alimentation en eau ;
- au moins une unité de distribution de café (6) ;
- au moins un circuit hydraulique de refoulement (7) adapté pour raccorder au moins ledit contenant (4) à ladite unité de distribution de café (6) ;
**caractérisée par le fait que** ledit circuit d'admission hydraulique (5) comprend au moins un bloc d'admission d'un seul tenant (8) à l'intérieur duquel est prédéfini au moins un conduit de transport d'eau (9) ayant au moins une lumière d'admission (9a) pouvant être raccordée à un conduit d'alimentation en eau, au moins une embouchure de transit (9b) communiquant avec ladite bouilloire (3) et au moins une lumière de refoulement (9c) communiquant avec ledit contenant (4).

2. Machine (1) selon la revendication 1, **caractérisée par le fait que** ledit bloc d'admission d'un seul tenant (8) est constitué d'un matériau choisi parmi : le plastique, l'acier inoxydable et l'aluminium.

3. Machine (1) selon la revendication 1 ou 2, **caractérisée par le fait que** ledit conduit de transport (9) a au moins un conduit commun (9d) comprenant ladite lumière d'admission (9a) et au moins des premier et second conduits (9e, 9f) qui bifurquent dudit conduit commun (9d) et qui comprennent ladite embouchure de transit (9b) et ladite lumière de refoulement (9c) respectivement.

4. Machine (1) selon une ou plusieurs des revendications précédentes, **caractérisée par le fait que** ledit circuit d'admission hydraulique (5) comprend au moins un dispositif de soupape (15) associé audit bloc d'admission d'un seul tenant (8) le long dudit premier conduit (9e) et raccordé de manière opérationnelle à un capteur de niveau (16) ajusté sur ladite bouilloire (3), le dispositif de soupape (15) s'ouvrant pour permettre à l'eau de s'écouler vers ladite embouchure de transit (9b) lorsque le niveau de l'eau dans la bouilloire (3) tombe en dessous du niveau prédéterminé par ledit capteur de niveau (16).

5. Machine (1) selon une ou plusieurs des revendications précédentes, **caractérisée par le fait que** ledit bloc d'admission d'un seul tenant (8) comprend au moins un conduit de dérivation (18) communiquant avec ladite lumière d'admission (9a) et avec une section dudit premier conduit (9e) placée entre ledit dispositif de soupape (15) et ladite embouchure de transit (9b) et **par le fait que**, le long dudit conduit de dérivation (18), est agencé au moins un premier robinet (19) qui peut être actionné pour permettre/empêcher l'écoulement d'eau.

6. Machine (1) selon une ou plusieurs des revendications précédentes, **caractérisée par le fait que** ledit bloc d'admission d'un seul tenant (8) comprend au moins un conduit d'échappement d'eau (20) communiquant avec une section dudit premier conduit (9e) placé entre ladite embouchure de transit (9b) et ledit dispositif de soupape (15) et avec une lumière d'échappement (21) pouvant être raccordée à une conduite d'échappement d'eau, le long dudit conduit d'échappement (20) étant agencé au moins un second robinet (22) qui peut être actionné pour permettre/empêcher l'écoulement d'eau le long dudit conduit d'échappement (20).

7. Machine (1) selon une ou plusieurs des revendications précédentes, **caractérisée par le fait que** ledit circuit d'admission hydraulique (5) comprend au moins un compteur volumétrique (26) associé audit bloc d'admission d'un seul tenant (8) le long dudit second conduit (9f), ledit bloc d'admission d'un seul tenant (8) définissant au moins un siège (27) destiné à loger ledit compteur volumétrique (26).

8. Machine (1) selon une ou plusieurs des revendications précédentes, **caractérisée par le fait que** ledit circuit de refoulement hydraulique (7) comprend au moins un bloc de refoulement d'un seul tenant (28) placé entre ladite bouilloire (3) et ladite unité de distribution de café (6) et dans lequel sont prédéterminés au moins un canal de distribution d'eau (29), communiquant à une extrémité avec ledit contenant (4) et à l'autre extrémité avec ladite unité de distribution de café (6) et au moins l'un entre au moins un canal de distribution d'eau chaude (30), communiquant à une extrémité avec ladite bouilloire (3) et à l'autre extrémité avec une unité de distribution d'eau chaude (31), et au moins un canal d'émission de vapeur (32), communiquant à une extrémité avec ladite bouilloire (3) et à l'autre extrémité avec une unité de distribution de vapeur (33).

9. Machine (1) selon la revendication 8, **caractérisée par le fait qu'**au moins l'un desdits canaux (29, 30, 32) a au moins une première lumière (29a, 30a, 32a) communiquant directement avec ledit contenant (4) ou avec ladite bouilloire (3) et au moins une seconde lumière (29b, 30b, 32b) communiquant directement avec l'unité de distribution (6, 31, 33) concernée.

10. Machine (1) selon la revendication 8 ou 9, **caractérisée par le fait que**, dans ledit bloc de refoulement d'un seul tenant (28), est prédéterminé au moins un conduit de retour d'eau (37), séparé dudit canal de distribution (29) et communiquant à une extrémité avec ladite unité de distribution de café (6) et à l'autre extrémité avec ledit contenant (4).

11. Machine (1) selon une ou plusieurs des revendications 8 à 10, **caractérisée par le fait que** ledit bloc de refoulement d'un seul tenant (28) comprend au moins un siège (41) destiné à loger au moins un capteur (16, 42) et/ou au moins une soupape (43, 44) communiquant avec ladite bouilloire (3) ou avec ledit contenant (4).

12. Machine (1) selon une ou plusieurs des revendications précédentes, **caractérisée par le fait que** ledit au moins un bloc de refoulement d'un seul tenant (28) comprend au moins un premier bloc (28a) associé à ladite bouilloire et au moins un second bloc (28b) associé à au moins l'une desdites unités de distribution (6, 31, 33), lesdits premier et second blocs (28a, 28b) étant directement associés l'un à l'autre de façon amovible.

13. Machine (1) selon la revendication 12, **caractérisée par le fait qu'**au moins l'un desdits canaux (29, 30, 32) a une première section relative (29c, 30c, 32c), définie dans ledit premier bloc (28a) et comprenant la première lumière relative (29a, 30a, 32a), et une seconde section relative (29d, 30d, 32d), définie dans ledit second bloc (28b) et comprenant la seconde lumière relative (29b, 30b, 32b).

14. Machine (1) selon la revendication 12 ou 13, **caractérisée par le fait que** ledit premier bloc (28a) est associé de façon amovible à ladite bouilloire (3) et que ledit second bloc (28b) est associé de façon amovible à au moins l'une desdites unités de distribution (6, 31, 33).

15. Machine (1) selon une ou plusieurs des revendications 10 à 14, **caractérisée par le fait que** lesdits sièges (41) sont définis dans ledit premier bloc (28a) et que ledit conduit de retour (37) est défini dans ledit second bloc (28b).
